# EUROPÄISCHE PATENTANMELDUNG

(11) **EP 4 741 273 A1**
(43) Veröffentlichungstag der Anmeldung: **13.05.2026**
(21) Anmeldenummer: 25155212.1
(22) Anmeldetag: 31.01.2025
(51) Int. Cl.: B62M 19/00, F03B 17/06, F03D 15/00, F16H 41/02, F16H 41/04

(54) **HYDRODYNAMISCHER WANDLER FÜR EINE WINDKRAFTANLAGE**

(30) Priorität: 06.11.2024 EP 24211121
(71) Anmelder: Air Innovation SH.P.K., 60000 n.n. Gjilan, Kosovo (AL)
(72) Erfinder: FEHMI, Mustafa, 60000 n.n. Gjilan, Kosovo (AL)
(74) Vertreter: Kador & Partner Part mbB

(57) **Zusammenfassung**

Die vorliegende Erfindung bezieht sich auf einen neuartigen hydrodynamischen Wandler für eine Windkraftanlage (100 zur Erzeugung elektrischer Energie, aufweisend eine Pumpe (1) mit einer Pumpenwelle (23), die mechanisch mit einer Rotorwelle (120a) der Windkraftanlage (100) verbindbar ist, eine Turbine (11) mit einer Turbinenwelle (45), die mechanisch mit einer Antriebswelle (140) eines Generators (130) verbindbar ist, und fluidisch mit der Pumpe (1) verbunden ist, wobei der hydrodynamische Wandler dazu eingerichtet ist, Hydraulikfluid in einem Kreislauf zwischen der Pumpe (1) und der Turbine (11) zu zirkulieren und dadurch Antriebsgrößen der Pumpenwelle (23) auf die Turbinenwelle (45) zu übertragen.

## Beschreibung

Die vorliegende Erfindung bezieht sich auf einen neuartigen hydrodynamischen Wandler für eine Windkraftanlage.

Im Stand der Technik bekannt sind Automatikgetriebe für Kraftfahrzeuge, die einen hydrodynamischen Drehmomentwandler aufweisen, der üblicherweise zwischen Motor und Getriebe eines Kraftfahrzeugs angeordnet ist.

Beispielsweise zeigt EP 2 146 115 A1 einen hydrodynamischen Drehmomentwandler, umfassend ein mit Fluid gefülltes Gehäuse, ein Pumpenrad, das an dem Gehäuse angebracht ist, ein dem Pumpenrad gegenüberliegendes Turbinenrad, das in einem Gehäuseinnenraum des Gehäuses angebracht ist, und ein Leitrad, das zwischen dem Pumpenrad und dem Turbinenrad angeordnet ist. In einem Wandlerbetrieb des Drehmomentwandlers sind Schaufeln des Leitrads derart zwischen Schaufeln des Pumpen- und Turbinenrads angeordnet, dass eine Fluidzirkulation zwischen dem Turbinenrad und dem Pumpenrad die Leitradschaufeln umströmt.

Die vorliegende Erfindung hat sich zum Ziel gesetzt, einen hydrodynamischer Wandler für eine Windkraftanlage bereitzustellen, mit dem die Lebensdauer der Windkraftanlage verlängert und deren Effizienz erhöht werden kann.

Der erfindungsgemäße hydrodynamische Wandler weist eine Pumpe mit einer Pumpenwelle sowie eine Turbine mit einer Turbinenwelle auf. Die Pumpenwelle ist mechanisch mit einer Rotorwelle der Windkraftanlage verbindbar, und die Turbinenwelle ist mechanisch mit einer Antriebswelle eines Generators der Windkraftanlage verbindbar. Auf der Rotorwelle der Windkraftanlage kann mindestens ein Rotor mit einem oder mehreren Rotorblättern angeordnet sein, auf die eine Windkraft aufgebracht werden kann, welche den Rotor antreibt. Bei dem Generator kann es sich um einen Asynchron- oder Synchron-Generator mit fester oder variabler Drehzahl handeln.

Die mechanischen Verbindungen zwischen den einzelnen Wellen können beispielsweise mittels geeigneter Kupplungen, z.B. mittels starrer Kupplungen, elastischer Kupplungen oder Gelenkkupplungen realisiert werden. Es ist ebenso möglich, dass zwischen Rotorwelle und Pumpenwelle und/oder zwischen Turbinenwelle und Generatorwelle ein Getriebe angeordnet ist, das beispielsweise ein mechanisches Getriebe sein kann.

Zudem ist die Turbine fluidisch mit der Pumpe verbunden, d.h. ein Ausgang der Pumpe ist mit einem Eingang der Turbine und ein Ausgang der Turbine ist mit einem Eingang der Pumpe verbunden.

Der hydrodynamische Wandler ist dazu eingerichtet, Hydraulikfluid in einem Kreislauf, insbesondere in einem geschlossenen Kreislauf, zwischen der Pumpe und der Turbine zu zirkulieren und dadurch Antriebsgrößen der Pumpenwelle auf die Turbinenwelle zu übertragen. Unter den Antriebsgrößen der Pumpenwelle sollen z.B. eine Drehzahl, ein Drehmoment und eine Leistung der Pumpenwelle verstanden werden. Das Hydraulikfluid kann beispielsweise eine Hydraulikflüssigkeit, wie z.B. eine Flüssigkeit auf Mineralöl- oder auf Wasserbasis sein.

Insbesondere kann die Pumpenwelle von der Rotorwelle der Windkraftanlage mit einer bestimmten Drehzahl und einem bestimmten Drehmoment angetrieben werden, woraufhin die Pumpe Hydraulikfluid mit einem bestimmten Druck zu der Turbine fördert. In Folge dessen, führt die Turbine eine rotatorische Bewegung aus und treibt über die Turbinenwelle die Generatorwelle an. Der geschlossene Hydraulikfluidkreislauf kann gebildet werden, indem die Pumpe das Hydraulikfluid von dem Pumpenausgang über den Turbineneingang in die Turbine und von dort über den Turbinenausgang und den Pumpeneingang zurück in die Pumpe fördert.

Die Pumpe und die Turbine können jeweils ein Gehäuse aufweisen, in dem die entsprechenden Eingänge und Ausgänge angebracht sind. Außerdem können die Pumpen- und die Turbinenwelle mittels geeigneter Lager in dem jeweiligen Gehäuse gelagert sein. Die Gehäuse können insbesondere zweiteilig ausgeführt sein, um eine einfache Montage von Pumpe und Turbine zu ermöglichen. Die beiden Gehäuseteile des Pumpen- bzw. Turbinengehäuses können beispielsweise miteinander verschraubt sein. Jede andere geeignete Verbindung der beiden Gehäuseteile ist ebenso möglich.

In einer Ausführungsform des hydrodynamischen Wandlers kann zwischen dem Ausgang der Pumpe und dem Eingang der Turbine eine erste hydraulische Verbindung und zwischen dem Ausgang der Turbine und dem Eingang der Pumpe eine zweite hydraulische Verbindung angeordnet sein. Die beiden hydraulischen Verbindungen können z.B. als Leitungen und/oder als Rohre ausgebildet sein.

In einer weiteren Ausführungsform des hydrodynamischen Wandlers kann die Pumpe einen Rotor aufweisen, der auf der Pumpenwelle angeordnet ist, und auf dessen Außenseite ein oder mehrere Flügel angebracht sind. Bevorzugt kann der Rotor zwei Flügel aufweisen, es ist jedoch ebenso möglich, dass nur ein Flügel oder mehr als zwei Flügel an der Außenseite des Rotors angebracht sind. Die Außenseite des Rotors bezeichnet dessen radiale Außenfläche, die von der Pumpenwelle abgewandt ist. Der Rotor kann fest mit der Pumpenwelle verbunden sein, z.B. mittels einer geeigneten Welle-Nabe-Verbindung. Es ist ebenso möglich, dass die Pumpenwelle und der Rotor einstückig ausgebildet sind.

In einer bevorzugten Ausführungsform des hydrodynamischen Wandlers kann sich eine Rückseite (stromaufwärtige Seite) jedes Flügels senkrecht zu der Außenseite des Rotors radial nach außen erstrecken und sich eine Vorderseite (stromabwärtige Seite) jedes Flügels unter einem Neigungswinkel von der Außenseite des Rotors zu einer äußeren Kante der Rückseite erstrecken. Dadurch kann jeder Flügel in einem Längsschnitt durch die Pumpe eine Form eines rechtwinkligen Dreiecks aufweisen.

In einer Ausführungsform des hydrodynamischen Wandlers kann die Pumpe einen zu der Antriebswelle konzentrischen Umlaufkanal enthalten, der den Eingang und den Ausgang der Pumpe verbindet. Zudem kann die Pumpe einen Sperrkanal aufweisen, der zwischen dem Eingang und dem Ausgang der Pumpe angeordnet und mittels eines Ventils verschlossen ist.

Zweckmäßigerweise können der Umlaufkanal und der Sperrkanal in dem Pumpengehäuse angeordnet sein.

Der Umlaufkanal kann eine Kreisbogenform aufweisen und so ausgestaltet sein, dass ein Mittelpunktswinkel eines der Form des Umlaufkanals zugrundeliegenden Kreisbogens zwischen Pumpeneingang und Pumpenausgang in einem Bereich zwischen 30° und 180° liegt, wobei dieser Mittelpunktswinkel üblicherweise 180° beträgt. Insbesondere kann der Umlaufkanal parallel zu einer Ebene senkrecht zu einer Achse der Pumpenwelle in dem Pumpengehäuse angeordnet sein.

In einer Ausführungsform des hydrodynamischen Wandlers kann der Pumpeneingang dazu eingerichtet sein, das Hydraulikfluid in tangentialer Richtung zu einem zu der Pumpenwelle konzentrischen Kreis in den Umlaufkanal einzuleiten. Ebenso kann der Pumpenausgang dazu eingerichtet sein, das Hydraulikfluid in tangentialer Richtung zu dem zu der Pumpenwelle konzentrischen Kreis aus dem Umlaufkanal herauszuleiten. Dabei kann durch den Pumpeneingang in den Umlaufkanal tangential eintretendes Hydraulikfluid auf im Umlaufkanal befindliche Rückseiten der Flügel drücken und somit eine Rotation des Rotors bzw. der Pumpenwelle in Strömungsrichtung des Hydraulikfluids bewirken. Das Hydraulikfluid kann nach dem Umlauf im Umlaufkanal durch den Pumpenausgang tangential aus der Pumpe austreten. Dies kann insbesondere mit einem konstanten Moment und mit tangentialer Wirkung erfolgen, d.h. die Strömungsrichtung des Hydraulikfluids kann an jedem Punkt im Umlaufkanal tangential zu dessen Kreisbogenform sein. Mit anderen Worten kann die tangentiale Wirkung an jedem Punkt während des gesamten Umlaufs des Hydraulikfluids im Umlaufkanal bestehen, wodurch ein hoher Wirkungsgrad der Pumpe erreicht werden kann.

Vorzugsweise ist der Umlaufkanal Teil eines ringförmig, konzentrisch um den Rotor bzw. die Pumpenwelle ausgebildeten Gesamtkanals, der Öffnungen für den Pumpeneingang und den Pumpenausgang sowie den Sperrkanal aufweist. Das Ventil in dem Sperrkanal verhindert, dass Hydraulikfluid, die sich im Bereich des Pumpenausgangs befindet, zurück zum Pumpeneingang gelangen kann. Somit kann verhindert werden, dass bezüglich des in der Pumpe umlaufend strömenden Hydraulikfluids ein "Kurzschluss" erfolgt. Dazu kann das Ventil ein Schließelement aufweisen, das einen Querschnitt des Sperrkanals verschließt. Das Schließelement kann beispielsweise ein Schließzylinder sein.

Der Gesamtkanal kann auf seinem gesamten Umfang einen gleichen Durchmesser aufweisen, so dass sich die Flügel auch in dem Sperrkanal in gleicher Weise nach außen erstrecken können wie in dem Umlaufkanal. In einer bevorzugten Ausführungsform kann ein Durchmesser des Umlaufkanals sowie ein Durchmesser des Sperrkanals im Wesentlichen gleich einer Länge der Rückseite der Flügel sein. Mit anderen Worten kann ein radialer Abstand bzw. umlaufender Spalt zwischen der äußeren Kante der Flügelrückseiten und dem Pumpengehäuse nur so groß sein, dass die Flügel das Gehäuse gerade nicht berühren. Dabei können bei Festlegung des benötigten radialen Abstands unterschiedliche Randbedingungen in unterschiedlichen Betriebspunkten des hydraulischen Wandlers berücksichtigt werden. Auf diese Weise wird eine Leckage der Pumpe minimiert, wodurch deren Effizienz gesteigert werden kann.

Gemäß einer weiteren bevorzugten Ausführungsform des hydrodynamischen Wandlers kann ein Abschnitt des Sperrkanals der zwischen dem Ventil und dem Ausgang der Pumpe angeordnet ist, mittels eines Bypasskanals mit dem Ausgang der Pumpe verbunden sein. Dadurch kann Hydraulikfluid, das sich zwischen der Vorderseite eines in den Sperrkanal eintretenden Flügels und dem Schließelement des Ventils befindet, zu dem Pumpenausgang geleitet werden. Somit kann verhindert werden, dass sich Hydraulikfluid in dem Sperrkanal vor dem Ventil staut und dadurch eine Rotation des Freilaufs behindert oder sogar ganz verhindert wird.

In einer Ausführungsform des hydrodynamischen Wandlers kann jeder Flügel dazu eingerichtet sein, das Ventil zu öffnen, wenn ein Flügel den Sperrkanal passiert. Insbesondere kann in diesem Fall das Schließelement des Ventils mittels der geneigten Vorderseite des Flügels aus einer geschlossenen Stellung in eine geöffnete Stellung geschoben werden. Dabei kann der Sperrkanal bei geöffnetem Ventil von dem Flügel verschlossen werden, da sich dieser über einen Durchmesser des Sperrkanals erstreckt. Das Ventil kann eine Druckfeder umfassen, gegen deren Federkraft der Flügel das Ventil öffnet und die das Ventil wieder schließt, sobald der Flügel das Ventil überfahren hat. Anstelle einer Druckfeder kann das Ventil einen Magneten zum Schließen des Ventils enthalten. Insbesondere können die Druckfeder oder der Magnet auf das Schließelement wirken, so dass dieses in eine Stellung geschoben wird, in der es den Sperrkanal verschließt.

Gemäß einer Ausführungsform des hydrodynamischen Wandlers kann die Turbine baugleich zu der Pumpe ausgeführt sein, d.h. die Turbine kann die gleichen Elemente mit den gleichen Eigenschaften aufweisen wie die Pumpe. Beispielsweise kann die Turbine ebenfalls einen Rotor mit einem oder mehreren Flügeln aufweisen, der auf der Turbinenwelle angeordnet ist und die gleichen Merkmale aufweist wie der Pumpenrotor. Ebenso kann die Turbine einen konzentrischen Umlaufkanal sowie einen Sperrkanal mit einem Ventil und einem Bypasskanal enthalten, die gleich ausgebildet sind und die gleichen Eigenschaften aufweisen wie die entsprechenden Elemente der Turbine.

Die baugleiche Ausführung von Pumpe und Turbine führt zu einer gleichmäßigen Strömung in dem hydrodynamischen Wandler, wodurch die Antriebsgrößen Drehzahl, Drehmoment und Leistung optimal übertragen werden können. Zudem können durch die Gleichteile Fertigungs- und Wartungskosten reduziert werden.

Die Pumpe und die Turbine können einander zugewandt montiert sein, so dass der Pumpenausgang gegenüber dem Turbineneingang und der Turbinenausgang gegenüber dem Pumpeneingang angeordnet ist. Dadurch kann eine kompakte Bauform des hydrodynamischen Wandlers erzielt werden.

Der hydrodynamische Wandler wird in einer Windkraftanlage zum Antrieb von deren Generator verwendet.

Die Windkraftanlage umfasst neben dem hydrodynamischen Wandler einen Turm, der ein oberes und ein unteres Ende aufweist, mindestens einen Rotor, der an einem oberen Ende des Turms angeordnet ist und ein oder mehreren Rotorblättern sowie eine Rotorwelle aufweist, einen Generator mit einer Generatorwelle. Eine Pumpenwelle einer Pumpe des hydrodynamischen Wandlers ist mechanisch mit der Rotorwelle des Rotors der Windkraftanlage verbunden, und eine Turbinenwelle einer Turbine des hydrodynamischen Wandlers ist mechanisch mit der Generatorwelle des Generators der Windkraftanlage verbunden. Die mechanischen Verbindungen zwischen den einzelnen Wellen können beispielsweise mittels geeigneter Kupplungen, z.B. mittels starrer Kupplungen, elastischer Kupplungen oder Gelenkkupplungen realisiert werden. Es ist ebenso möglich, dass zwischen Rotorwelle und Pumpenwelle und/oder zwischen Turbinenwelle und Generatorwelle ein Getriebe angeordnet ist, das beispielsweise ein mechanisches Getriebe sein kann.

In einer Ausführungsform der Windkraftanlage kann der Generator an einem unteren Ende des Turms angeordnet sein. Diese Ausführungsform wird durch die Übertragung von Antriebsgrößen mittels des hydrodynamischen Wandlers ermöglicht. In diesem Fall können hydraulische Verbindungen zwischen der Pumpe und der Turbine des hydrodynamischen Wandlers eine entsprechende Länge aufweisen, um die Antriebsgrößen der Pumpe über die Turbine auf die Generatorwelle zu übertragen. Durch die beschriebene Anordnung des Generators am unteren Ende des Turms kann ein Gesamtgewicht von Bauteilen der Windkraftanlage, die sich am oberen Ende des Turms befinden, deutlich verringert werden. Dies ermöglicht wiederum eine Steigerung von Robustheit und Lebensdauer der Windkraftanlage.

In einer weiteren Ausführungsform der Windkraftanlage können zwei Rotoren auf einer gemeinsamen Rotorwelle an dem oberen Ende des Turms angeordnet sein. Beispielsweise kann ein erster Rotor an einem Ende und ein zweiter Rotor an einem gegenüberliegenden Ende der Rotorwelle angeordnet sein. Die mechanische Verbindung der Pumpenwelle mit der Rotorwelle kann in diesem Fall z.B. mittels eines Getriebes, insbesondere eines Kegelradgetriebes, erfolgen, dessen Abtriebswelle mit der Pumpenwelle verbunden sein kann. Die Anbringung eines zweiten Rotors an der Rotorwelle wird insbesondere durch die Positionierung des Generators am unteren Ende des Turms ermöglicht, da dadurch ein Gewicht des zweiten Rotors nicht zu einer Überschreitung eines zulässigen Gesamtgewichts am oberen Ende des Turms führt.

### Kurze Beschreibung der Zeichnungen

Figur 1 zeigt in vereinfachter schematischer Schnittdarstellung einen Längsschnitt durch einen hydrodynamischen Wandler mit einer Pumpe und einer Turbine gemäß einem Ausführungsbeispiel der Erfindung.
Figur 2 zeigt in vereinfachter schematischer Schnittdarstellung einen Querschnitt durch die in Figur 1 gezeigte Pumpe des hydrodynamischen Wandlers.
Figur 3 zeigt in vereinfachter räumlicher Darstellung einen Pumpenflügel der in Figur 2 gezeigten Pumpe.
Figur 4 zeigt in vereinfachter schematischer Darstellung eine Seitenansicht einer Windkraftanlage gemäß einem Ausführungsbeispiel der Erfindung.

### Beispiele

Ausführungsbeispiele des erfindungsgemäßen hydrodynamischen Wandlers sowie der erfindungsgemäßen Windkraftanlage werden im Folgenden unter Bezugnahme auf die Figuren näher beschrieben. In den Figuren sind gleiche oder ähnliche Elemente mit gleichen Bezugszeichen versehen. Daher wird gegebenenfalls auf eine wiederholende Beschreibung verzichtet.

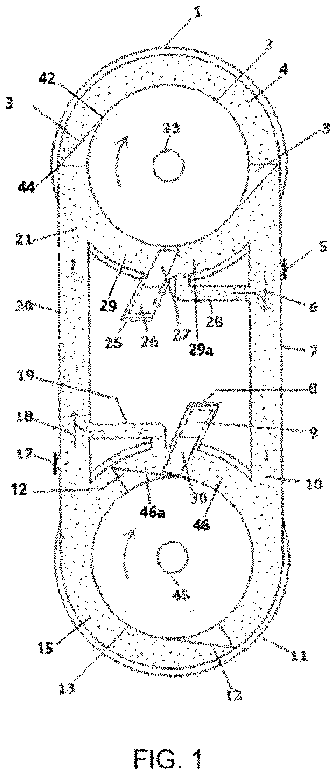

Ein Ausführungsbeispiel des hydrodynamischen Wandlers wird nachfolgend anhand der Figuren 1 bis 3 beschreiben.

Alle Bereiche des hydrodynamischen Wandlers, welche mit Hydraulikfluid beaufschlagt werden können, sind in Figur 1 durch gepunktete Flächen gekennzeichnet, und eine Strömungsrichtung des Hydraulikfluids ist darin durch Pfeile angedeutet. Ebenso ist eine Drehrichtung der Pumpe und der Turbine in Figur 1 jeweils durch einen Pfeil markiert.

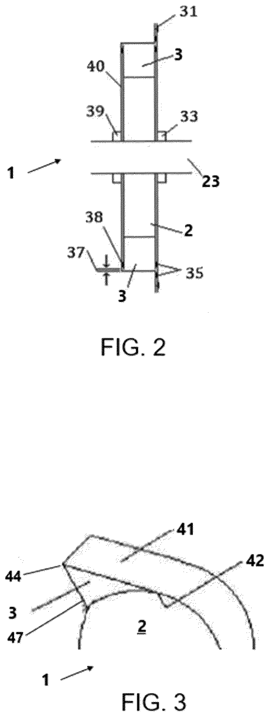

Die Pumpe 1 umfasst eine Pumpenwelle 23, die mit einer Rotorwelle einer Windkraftanlage (in den Figuren 1 bis 3 nicht dargestellt) mechanisch verbindbar ist. Die Pumpenwelle 23 ist fest mit einem Rotor 2 verbunden, auf dessen Außenseite zwei Flügel 3 in einem Abstand von 180° zueinander angeordnet sind, die in einem Gehäuse 40 der Pumpe 1 rotieren. Die Pumpenwelle 23 ist mittels zweier Lager 39, 33 in dem Gehäuse 40 gelagert (siehe Figur 2). Der Rotor 2 kann beispielsweise mittels einer üblichen Welle-Nabe-Verbindung mit der Pumpenwelle verbunden sein. Es ist ebenso möglich, dass Rotor 2 und Pumpenwelle 23 einstückig ausgeführt sind. Das Gehäuse 40 ist zweiteilig ausgeführt und weist auf einem äußeren Umfang eine Vielzahl von Verschraubungen 31 auf. Zudem sind an gegenüberliegenden Stirnseiten des Gehäuses 40 Dichtringe 35, 38 angebracht.

Die Flügel 3 der Pumpe 1 weisen in dem in Figur 1 gezeigten Längsschnitt eine Form eines rechtwinkligen Dreiecks auf. Eine Rückseite 47 der Flügel 3 erstreckt sich senkrecht von der Außenseite des Rotors 2 bis zu einem äußeren Umfang des Gehäuses 40 und eine Vorderseite 41 der Flügel 3 erstreckt sich unter einem Neigungswinkel von der Außenseite des Rotors 2 zu einer äußeren Kante der Flügelrückseite 47, z.B. von einem tiefsten Punkt 42 zu einem höchsten Punkt 44 der Flügel 3 (siehe auch Figur 3).

In dem Gehäuse 40 sind ein Umlaufkanal 4 und ein Sperrkanal 29 ausgebildet, die gemeinsam einen ringförmigen, konzentrisch um den Rotor 2 bzw. die Pumpenwelle 23 angeordneten Gesamtkanal 4, 29 ausbilden. Zudem weist die Pumpe 1 bzw. deren Gehäuse 40 einen Eingang 21 und einen Ausgang 6 auf, die mittels des Umlaufkanals 4 miteinander verbunden sind. Der Sperrkanal 29 ist zwischen dem Eingang 21 und dem Ausgang 6 der Pumpe 1 angeordnet und mittels eines Ventils 25 verschlossen. Dazu weist das Ventil 25 ein Schließelement 27 auf, das vorliegend als Schließzylinder 27 ausgebildet ist, der einen Querschnitt des Sperrkanals 29 verschließt. Der Umlaufkanal 4 weist eine Kreisbogenform auf, deren Mittelpunktswinkel 180° beträgt. Insbesondere ist der Umlaufkanal 4 vorliegend parallel zu einer Ebene senkrecht zu einer Achse der Pumpenwelle 23 in dem Gehäuse 40 angeordnet.

Ein Durchmesser des Umlaufkanals 4 sowie des Sperrkanals 29 ist im Wesentlichen gleich einer Länge der Rückseite 47 der Flügel 3, so dass sich diese von der Außenseite des Rotors 2 radial nach außen erstrecken können, um das Hydraulikfluid durch die Pumpe 1 zu fördern. Dabei besteht zwischen der äußeren Kante bzw. dem höchsten Punkt 44 der Flügel 3 und dem Gehäuse 40 nur ein minimaler radialer Abstand 37, der benötigt wird, um zu verhindern, dass die Flügel 3 das Gehäuse berühren. Dabei können bei Festlegung des benötigten radialen Abstands unterschiedliche Randbedingungen in unterschiedlichen Betriebspunkten des hydraulischen Wandlers berücksichtigt werden. Auf diese Weise wird eine Leckage der Pumpe minimiert, wodurch deren Effizienz gesteigert werden kann.

Das Ventil 25 wird mittels eines Flügels 3 geöffnet, wenn dieser den Sperrkanal 29 passiert. Dabei wird der Schließzylinder 27 des Ventils 25 mittels der geneigten Vorderseite 41 des Flügels 3 um einen Hub 26 aus einer geschlossenen Stellung in eine geöffnete Stellung geschoben. Während das Ventil 25 geöffnet ist, wird der Sperrkanal von dem Flügel 3 verschlossen, da sich dieser über einen Durchmesser des Sperrkanals 29 erstreckt. Das Ventil 25 kann eine Druckfeder umfassen (nicht dargestellt), gegen deren Federkraft der Flügel 3 das Ventil 25 öffnet und die das Ventil 25 wieder schließt, sobald der Flügel 3 das Ventil 25 überfahren hat. Anstelle einer Druckfeder kann das Ventil 25 einen Magneten zum Schließen des Ventils 25 enthalten (nicht dargestellt). Insbesondere können die Druckfeder oder der Magnet auf den Schließzylinder 27 wirken, so dass dieser in eine Stellung geschoben wird, in der er den Sperrkanal 29 verschließt.

Das Ventil 25 in dem Sperrkanal 29 verhindert, dass Hydraulikfluid, das sich im Bereich des Pumpenausgangs 6 befindet, zurück zum Pumpeneingang 21 gelangen kann. Somit kann verhindert werden, dass bezüglich der in der Pumpe 1 umlaufend strömenden Hydraulikfluid ein "Kurzschluss" erfolgt. Ein Abschnitt 29a des Sperrkanals 29, der sich zwischen dem Ventil 25 und dem Pumpenausgang 6 befindet, ist mittels eines Bypasskanals 28 mit dem Pumpenausgang 6 verbunden. Dadurch kann Hydraulikfluid, das sich zwischen der Vorderseite 41 eines in den Sperrkanal 29 eintretenden Flügels 3 und dem Schließelement 27 des Ventils 25 befindet, zu dem Pumpenausgang 6 geleitet werden. Auf diese Weise kann verhindert werden, dass sich Hydraulikfluid in dem Sperrkanal 29 vor dem Ventil 25 staut und dadurch eine Rotation des Rotors 2 behindert oder sogar ganz verhindert wird.

Die Turbine 11 ist baugleich zu der Pumpe 1 ausgeführt und umfasst eine Turbinenwelle 45, die mit einer Generatorwelle eines Generators der Windkraftanlage (in den Figuren 1 bis 3 nicht dargestellt) mechanisch verbindbar ist. Die Turbinenwelle 45 ist fest mit einem Rotor 13 verbunden, auf dessen Außenseite zwei Flügel 12 angeordnet sind, die in einem Gehäuse der Turbine 11 rotieren. Das Turbinengehäuse sowie die Lagerung der Turbinenwelle 45 und die Ausgestaltung des Rotors 13 mit den Turbinenflügeln 12 entspricht den in den Figuren 2 und 3 dargestellten Elementen der Pumpe 1.

Die Flügel 12 der Turbine weisen in dem in Figur 1 gezeigten Längsschnitt analog zu den Pumpenflügeln 3 eine Form eines rechtwinkligen Dreiecks auf und erstrecken sich in gleicher Weise von der Außenseite des Turbinenrotors 13 zu einem äußeren Umfang des Turbinengehäuses. Ebenso weist die Turbine 11 einen Umlaufkanal 15 und einen Sperrkanal 46 auf, die gemeinsam einen ringförmigen, konzentrisch um den Rotor 13 bzw. die Turbinenwelle 45 angeordneten Gesamtkanal 15, 46 ausbilden. Der Umlaufkanal 15 der Turbine 11 weist ebenfalls eine Kreisbogenform auf, deren Mittelpunktswinkel 180° beträgt. Insbesondere ist der Umlaufkanal 15 ebenfalls parallel zu einer Ebene senkrecht zu einer Achse der Turbinenwelle 45 in dem Turbinengehäuse angeordnet.

Zudem weist die Turbine 11 bzw. deren Gehäuse einen Eingang 10 und einen Ausgang 18 auf, die wiederum mittels des Umlaufkanals 15 miteinander verbunden sind. Analog zur Anordnung in der Pumpe 1, ist der Sperrkanal 46 der Turbine 11 zwischen deren Eingang 10 und Ausgang 18 angeordnet und mittels eines Ventils 8 verschlossen. Das Ventil 8 ist identisch zu dem Ventil 25 im Sperrkanal 29 der Pumpe 1 ausgeführt und enthält einen Schließzylinder 30, der einen Querschnitt des Sperrkanals 46 der Turbine 11 verschließt. Ebenso ist ein Abschnitt 46a des Sperrkanals 46 mittels eines Bypasskanals 19 mit dem Turbinenausgang 18 verbunden, um ein Aufstauen von Hydraulikfluid vor dem Ventil 8 zu vermeiden. Ein Öffnen und Schließen des Schließzylinders 30 des Ventils 8 erfolgt mittels der Turbinenflügel 12 wie oben im Zusammenhang mit der Pumpe 1 beschrieben, wobei der Schließzylinder 30 den Hub 9 ausführt.

Der Pumpeneingang 21 ist über eine Leitung 20 (zweite hydraulische Verbindung 20) mit dem Turbinenausgang 18 verbunden, und der Pumpenausgang 6 ist über eine Leitung 7 (erste hydraulische Verbindung 7) mit dem Turbineneingang 10 verbunden. Dadurch kann das Hydraulikfluid in einem Kreislauf zwischen Pumpe 1 und Turbine 11 zirkulieren. Anstelle der Leitungen 7, 20 können auch Rohre verwendet werden. Die Pumpe 1 und die Turbine 11 sind einander zugewandt angeordnet, so dass der Pumpeneingang 21 und der Turbinenausgang 18 sowie der Pumpenausgang 6 und der Turbineneingang 10 einander gegenüberliegen. Auf diese Weise bilden die Leitungen 20, 7 eine direkte Verbindung zwischen den Eingängen 21, 10 und Ausgängen 6, 18 von Pumpe 1 und Turbine 11, wodurch eine kompakte Bauform des hydrodynamischen Wandlers erzielt werden kann. Die beiden Leitungen 7, 20 sind zudem gleich lang, wodurch eine gleichmäßige Strömung des Hydraulikfluids in dem hydrodynamischen Wandler unterstützt wird.

Der Pumpeneingang 21 ist dazu eingerichtet, Hydraulikfluid, das aus der Leitung 20 in die Pumpe 1 eintritt (angedeutet durch den Pfeil vor dem Pumpeneingang 21) in tangentialer Richtung zu einem zu der Pumpenwelle 23 konzentrischen Kreis in den Umlaufkanal 4 einzuleiten. Ebenso ist der Pumpenausgang 6 vorliegend dazu eingerichtet, das Hydraulikfluid in tangentialer Richtung zu dem zu der Pumpenwelle 23 konzentrischen Kreis aus dem Umlaufkanal 4 herauszuleiten. Dabei trifft durch den Pumpeneingang 21 in den Umlaufkanal 4 tangential eintretendes Hydraulikfluid auf im Umlaufkanal 4 befindliche Rückseiten 47 der Flügel 3 auf und bewirkt somit eine Rotation des Rotors 2 bzw. der Pumpenwelle 23 in Strömungsrichtung des Hydraulikfluids. Nach dem Umlauf im Umlaufkanal 4 tritt das Hydraulikfluid durch den Pumpenausgang 6 tangential aus der Pumpe 1 aus. Außerdem wird an dieser Stelle durch den Bypasskanal 28 aus dem Abschnitt 29a des Sperrkanals 29 abgeführtes Hydraulikfluid aus der Pumpe 1 herausgeleitet (angedeutet durch die Pfeile am Pumpenausgang 6).

In der in Figur 1 gezeigten Darstellung befindet sich der Rotor 2 in einer Stellung, in der sich die Rückseiten 47 der beiden Pumpenflügel 3 in horizontaler Richtung erstrecken. In dieser Stellung des Rotors 2 wird besonders deutlich, dass das Hydraulikfluid bei Eintritt in und Austritt aus dem Umlaufkanal 4 senkrecht, d.h. in einem Winkel von 90°, auf die Rückseiten 47 der Pumpenflügel 3 trifft und somit tangential in den Umlaufkanal ein- und austritt. Aufgrund der Ausgestaltung des Rotors 2 mit den Pumpenflügeln 3 sowie des Umlaufkanals 4 ist die Strömungsrichtung des Hydraulikfluids an jedem Punkt im Umlaufkanal 4 tangential zu dessen Kreisbogenform, d.h. das von dem Hydraulikfluid auf den Rotor 2 übertragene Drehmoment ist während eines Umlaufs im Umlaufkanal 4 konstant und wirkt jederzeit tangential auf den Rotor 2. Mit anderen Worten besteht die tangentiale Wirkung an jedem Punkt während des gesamten Umlaufs des Hydraulikfluids im Umlaufkanal 4, wodurch ein hoher Wirkungsgrad der Pumpe 1 erreicht werden kann.

In gleicher Weise ist der Turbineneingang 10 dazu eingerichtet Hydraulikfluid, das aus der Leitung 7 in die Turbine 11 eintritt (angedeutet durch den Pfeil vor dem Turbineneingang 10) in tangentialer Richtung zu einem zu der Turbinenwelle 45 konzentrischen Kreis in den Umlaufkanal 15 einzuleiten. Ebenso ist der Turbinenausgang 18 vorliegend dazu eingerichtet, das Hydraulikfluid in tangentialer Richtung zu dem zu der Turbinenwelle 45 konzentrischen Kreis aus dem Umlaufkanal 15 herauszuleiten. Dabei trifft wiederum durch den Turbineneingang 10 in den Umlaufkanal 15 tangential eintretendes Hydraulikfluid auf im Umlaufkanal 15 befindliche Rückseiten 47 der Flügel 3 auf und bewirkt somit eine Rotation des Rotors 13 bzw. der Turbinenwelle 45 in Strömungsrichtung des Hydraulikfluids. Nach dem Umlauf im Umlaufkanal 15 tritt das Hydraulikfluid durch den Turbinenausgang 18 tangential aus der Turbine 11 aus. Außerdem wird an dieser Stelle durch den Bypasskanal 28 aus dem Abschnitt 46a des Sperrkanals 46 abgeführtes Hydraulikfluid aus der Turbine 11 herausgeleitet (angedeutet durch die Pfeile am Turbinenausgang 18). Aufgrund der Baugleichheit von Pumpe 1 und Turbine 11 ist auch hier das von dem Hydraulikfluid auf den Rotor 13 übertragene Drehmoment während eines Umlaufs im Umlaufkanal 15 konstant und wirkt jederzeit tangential auf den Rotor 2, so dass auch ein hoher Wirkungsgrad der Turbine 11 erzielt werden kann. Die baugleiche Ausführung von Pumpe 1 und Turbine 11 führt außerdem zu einer gleichmäßigen Strömung in dem hydrodynamischen Wandler, wodurch die Antriebsgrößen Drehzahl, Drehmoment und Leistung optimal übertragen werden können. Zudem können durch die Gleichteile Fertigungs- und Wartungskosten reduziert werden.

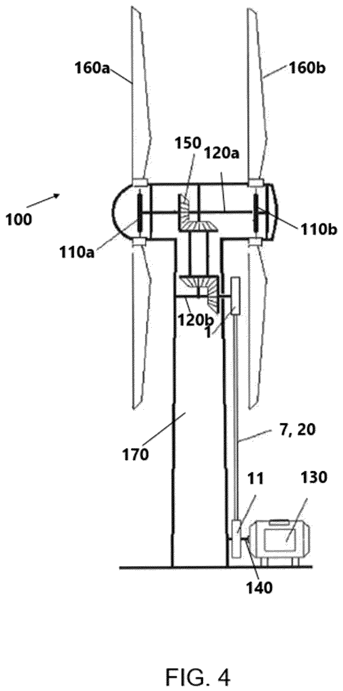

Nachfolgend wird ein Ausführungsbeispiel der erfindungsgemäßen Windkraftanlage 100 anhand von Figur 4 beschrieben.

Die dargestellte Windkraftanlage 100 umfasst einen Turm 170, der ein oberes und ein unteres Ende aufweist sowie zwei Rotoren 110a, 11 0b, die an einem oberen Ende des Turms 170 angeordnet sind. Die beiden Rotoren 110a, 110b sind vorliegend an gegenüberliegenden Enden einer gemeinsamen Rotorwelle 120a angeordnet und weisen jeweils mehrere Rotorblätter 160a, 160b auf, von denen in Figur 4 jeweils zwei sichtbar sind.

Die Anbringung von zwei Rotoren 110a, 110b auf der Rotorwelle 120a wird durch eine Position eines Generators 130 der Windkraftanlage 100 ermöglicht, der nicht wie üblich am oberen Ende des Turms 170 mit der Rotorwelle 120a verbunden ist, sondern stattdessen an dessen unterem Ende angeordnet ist. Eine Generatorwelle 130 des Generators wird dabei über ein Kegelradgetriebe 150 sowie einen hydrodynamischer Wandler, wie in den Figuren 1 bis 3 gezeigt, von den Rotoren 110a, 110b angetrieben.

Insbesondere sind das Kegelradgetriebe 150 sowie ein hydrodynamischer Wandler zwischen der Rotorwelle 120a und der Generatorwelle 140 angeordnet. Von dem hydrodynamischen Wandler sind in Figur 4 die Pumpe 1 und die Turbine 11 sowie die hydraulischen Verbindungen 7, 20 zwischen der Pumpe 1 und der Turbine sichtbar.

Das Kegelradgetriebe 150 enthält ein erstes, nicht näher bezeichnetes Kronrad, das auf der Rotorwelle 120a angeordnet ist, sowie ein zweites, nicht näher bezeichnetes Kronrad, das auf einer Abtriebswelle 120b des Kegelradgetriebes 150 angeordnet ist, die mit einer Pumpenwelle (in Figur 4 nicht dargestellt) der Pumpe 1 des hydrodynamischer Wandlers verbunden ist. In das erste Kronrad greift ein erstes, nicht näher bezeichnetes Kegelrad ein, das mittels zweier nicht näher bezeichneter Achsen mit einem zweiten, nicht näher bezeichneten Kegelrad verbunden ist, das wiederum in das zweite Kronrad eingreift. Auf diese Weise kann eine Drehbewegung der Rotorwelle 120a auf eine Pumpenwelle des hydrodynamischen Wandlers übertragen werden, der diese wiederum über die Turbine 11 auf die Generatorwelle 140 überträgt. Die Abtriebswelle 120b des Kegelradgetriebes 150 kann z.B. mittels einer geeigneten Kupplung mit der Pumpenwelle des hydraulischen Wandlers mechanisch verbunden sein. Ebenso können die Turbinenwelle (in Figur 4 nicht gezeigt) und die Generatorwelle mit einer geeigneten Kupplung mechanisch verbunden sein.

Aufgrund der Position des Generators 130 am unteren Ende des Turms 170 können die hydraulischen Verbindungen 7, 20 vorliegend als Rohre ausgeführt sein, um über die benötigte Länge zwischen Pumpe 1 und Turbine 11 eine ausreichende Stabilität bereitzustellen.

Durch die beschriebene Anordnung des Generators am unteren Ende des Turms kann ein Gesamtgewicht von Bauteilen der Windkraftanlage, die sich am oberen Ende des Turms befinden, deutlich verringert werden. Dies ermöglicht wiederum eine Steigerung von Robustheit und Lebensdauer der Windkraftanlage. Zudem wird dadurch eine Anbringung eines zweiten Rotors 110b an der Rotorwelle 120a ermöglicht, da ein zusätzliches Gewicht desselben nicht zu einer Überschreitung eines zulässigen Gesamtgewichts am oberen Ende des Turms 170 führt.

### Bezugszeichenliste

- 1: Pumpe
- 2: Pumpenrotor
- 3: Pumpenschaufel
- 4: Umlaufkanal Pumpe
- 5, 17: Füllstutzen
- 6: Pumpenausgang
- 7: Verbindungsleitung Pumpe zu Turbine
- 8: Sperrventil Turbine
- 9: Hub Schließelement des Sperrventils Turbine
- 10: Turbineneingang
- 11: Turbine
- 12: Flügel
- 13: Turbinenrotor
- 15: Umlaufkanal Turbine
- 18: Turbinenausgang
- 19: Bypasskanal Turbine
- 20: Verbindungsleitung Turbine zu Pumpe
- 21: Pumpeneingang
- 23: Pumpenwelle
- 25: Sperrventil Pumpe
- 26: Hub Schließelement des Sperrventils Pumpe
- 27: Schließelement des Sperrventils Pumpe
- 28: Bypasskanal Pumpe
- 29: Sperrkanal Pumpe
- 30: Schließelement des Sperrventils Turbine
- 31: Verschraubung Turbinengehäuse
- 33, 39: Lager Turbine
- 35, 38: Dichtringe Pumpe, Turbine
- 37: Abstand Flügel zu Gehäuse
- 41: Vorderseite Flügel
- 42: tiefster Punkt Flügel
- 44: höchster Punkt Flügel
- 45: Turbinenwelle
- 46: Sperrkanal Turbine
- 47: Rückseite Flügel
- 100: Windkraftanlage
- 110a, 110b: Rotor Windkraftanlage
- 120a, 120b: Rotorwelle Windkraftanlage
- 130: Generator
- 140: Antriebswelle Generator
- 150: Getriebe
- 160a, 160b: Rotorblatt Windkraftanlage
- 170: Turm (170)

## Patentansprüche

1. Hydrodynamischer Wandler für eine Windkraftanlage (100), aufweisend
- eine Pumpe (1) mit einer Pumpenwelle (23), die mechanisch mit einer Rotorwelle (120a) der Windkraftanlage (100) verbindbar ist;
- eine Turbine (11) mit einer Turbinenwelle (45), die mechanisch mit einer Antriebswelle (140) eines Generators (130) verbindbar ist, und fluidisch mit der Pumpe (1) verbunden ist,
wobei der hydrodynamische Wandler dazu eingerichtet ist, Hydraulikfluid in einem Kreislauf zwischen der Pumpe (1) und der Turbine (11) zu zirkulieren und dadurch Antriebsgrößen der Pumpenwelle (23) auf die Turbinenwelle (45) zu übertragen.

2. Hydrodynamischer Wandler nach Anspruch 1, wobei die Pumpe (1) einen zu der Pumpenwelle (23) konzentrischen Umlaufkanal (4) aufweist, der einen Eingang (21) und einen Ausgang (6) der Pumpe (1) verbindet, und einen Sperrkanal (29) aufweist, der zwischen dem Eingang (21) und dem Ausgang (6) der Pumpe (1) angeordnet und mittels eines Ventils (25) verschlossen ist.

3. Hydrodynamischer Wandler nach Anspruch 2, wobei der Eingang (21) der Pumpe (1) dazu eingerichtet ist, das Hydraulikfluid in tangentialer Richtung zu einem zu der Pumpenwelle (23) konzentrischen Kreis in den Umlaufkanal (4) einzuleiten, und der Ausgang (6) der Pumpe (1) dazu eingerichtet ist, das Hydraulikfluid in tangentialer Richtung zu dem zu der Pumpenwelle (23) konzentrischen Kreis aus dem Umlaufkanal (4) herauszuleiten.

4. Hydrodynamischer Wandler nach Anspruch 2 oder 3, wobei ein Abschnitt (29a) des Sperrkanals (29) der zwischen dem Ventil (25) und dem Ausgang (6) der Pumpe (1) angeordnet ist, mittels eines Bypasskanals (28) mit dem Ausgang (6) der Pumpe (1) verbunden ist.

5. Hydrodynamischer Wandler nach einem der vorstehenden Ansprüche 2 bis 4, wobei die Pumpe (1) einen Rotor (2) aufweist, der auf der Pumpenwelle (23) angeordnet ist, und auf dessen Außenseite ein oder mehrere Flügel (3) angebracht sind.

6. Hydrodynamischer Wandler nach Anspruch 5, wobei sich eine Rückseite (47) jedes Flügels (3) senkrecht zu der Außenseite des Rotors (2) radial nach außen erstreckt und sich eine Vorderseite (41) jedes Flügels (3) unter einem Neigungswinkel von der Außenseite des Rotors (2) zu einer äußeren Kante der Rückseite (47) erstreckt.

7. Hydrodynamischer Wandler Anspruch 6, wobei ein Durchmesser des Umlaufkanals (4) sowie ein Durchmesser des Sperrkanals (29) im Wesentlichen gleich einer Länge der Rückseite (47) der Flügel (3) ist.

8. Hydrodynamischer Wandler nach einem der Ansprüche 5 bis 7, wobei jeder Flügel (3) dazu eingerichtet ist, das Ventil (25) zu öffnen, wenn ein Flügel (3) den Sperrkanal (29) passiert.

9. Hydrodynamischer Wandler nach einem der vorstehenden Ansprüche, wobei die Turbine (11) baugleich zu der Pumpe (1) ausgeführt ist.

10. Hydrodynamischer Wandler nach einem der Ansprüche 2 bis 9, wobei zwischen dem Ausgang (6) der Pumpe (1) und dem Eingang (10) der Turbine (11) eine erste hydraulische Verbindung (7) und zwischen dem Ausgang (18) der Turbine (11) und dem Eingang (21) der Pumpe (1) eine zweite hydraulische Verbindung (20) angeordnet ist.

11. Verwendung eines hydrodynamischer Wandlers nach einem der Ansprüche 1 bis 10 zum Antrieb eines Generators (130) in einer Windkraftanlage (100).

12. Windkraftanlage (100), umfassend
- einen Turm (170), der ein oberes und ein unteres Ende aufweist;
- mindestens einen Rotor (110a, 110b), der an einem oberen Ende des Turms (170) angeordnet ist und ein oder mehreren Rotorblättern (160a, 160b) sowie eine Rotorwelle (120a) aufweist;
- einen Generator (130) mit einer Generatorwelle (140); und
- einen hydrodynamischen Wandler nach zumindest einem der Ansprüche 1 bis 9, wobei eine Pumpenwelle (23) einer Pumpe (1) des hydrodynamischen Wandlers mechanisch mit der Rotorwelle (120a) und eine Turbinenwelle (45) einer Turbine (11) des hydrodynamischen Wandlers mechanisch mit der Generatorwelle (140) verbunden ist.

13. Windkraftanlage (100) nach Anspruch 11, wobei der Generator (130) an einem unteren Ende des Turms (170) angeordnet ist.

14. Windkraftanlage (100) nach Anspruch 11 oder 12, wobei zwei Rotoren (110a, 11 0b) auf einer gemeinsamen Rotorwelle (120a) an dem oberen Ende des Turms (170) angeordnet sind.
